# DEMANDE DE BREVET EUROPEEN

(11) **EP 1 895 410 A1**
(43) Date de publication de la demande: **05.03.2008**
(21) Numéro de dépôt: 07115444.7
(22) Date de dépôt: 31.08.2007
(51) Int. Cl.: G06F 9/445, G06F 17/30

(54) **Procédé et système d'extraction d'un tableau croisé d'une base de données, et produit programme d'ordinateur correspondant**

(30) Priorité: 01.09.2006 FR 0607695
(71) Demandeur: FRANCE TELECOM, 75015 Paris (FR)
(72) Inventeur: Feraud, Raphaël, 22700 Perros Guirec (FR); Boulle, Marc, 22730 Tregastel (FR); Le Cam, Aurélie, 22300 Lannion (FR)
(74) Mandataire: Guéné, Patrick Lucien Juan Joseph

(57) **Abrégé**

L'invention concerne un procédé d'extraction d'un tableau croisé (22) d'une base de données (24). Le tableau croisé comprend en ligne, respectivement colonne, des instances et en colonne, respectivement ligne, des indicateurs caractérisant les instances. Le procédé comprend les étapes suivantes :
a) obtention (51) d'une spécification initiale d'une étude ;
b) à partir de ladite spécification initiale, construction (52) d'un dictionnaire d'extraction d'un tableau croisé (25, 26, 27), permettant de :
* spécifier des instances concernées par l'étude dans la base de données ;
* spécifier une formule d'extraction, un recodage et un rôle pour chacun des indicateurs concernés par l'étude ; et

c) extraction initiale (53, 54) d'un tableau croisé, en appliquant ledit dictionnaire d'extraction à ladite base de données.

## Description

### 1. DOMAINE DE L'INVENTION

L'invention se situe dans le domaine de l'informatique décisionnelle (« Business Intelligence » en anglais) et plus spécifiquement dans le domaine de la fouille de données (« data mining » en anglais).

La fouille de données permet de transformer les différentes sources de données d'une entreprise (données clients, données trafic, données textuelles, données multimédia...) en une connaissance exploitable. En d'autres termes, elle recouvre un ensemble de techniques permettant d'enrichir et d'exploiter des données pour atteindre un objectif opérationnel.

Plus précisément, l'invention concerne une technique d'extraction d'un tableau croisé d'une base de données source.

### 1.1 Terminologie

Tableau croisé (ou « Data Table » en anglais) : tableau qui comprend en ligne les instances sur lesquelles porte l'étude, et en colonne les indicateurs caractérisant ces instances.

Entrepôt de données (ou « Datawarehouse » (DWH), en anglais) : base de données permettant de regrouper, consolider et historiser les données afin de les mettre à disposition pour un ensemble d'applications.

Mini-entrepôt (ou « Datamart » en anglais) : base de données orientée vers une application particulière.

Outil de type ETL (pour « Extraction Transformation and Loading » en anglais) : outil permettant de réaliser des extractions et des transformations d'une source de données vers une autre source de données.

Instance : ligne dans un tableau croisé ou une table. Par instance, on entend par exemple un client, un produit, une communication, une transaction, une adresse IP... ou plus généralement tout élément qui peut être traité comme une unité indépendante ou un membre d'une catégorie particulière, et à propos duquel des données peuvent être stockées.

Indicateur : variable calculée à partir d'un ou plusieurs attributs d'une base de données relationnelle, c'est-à-dire à partir des données de détails de cette base de données relationnelle. Un attribut est parfois aussi appelé champ.

Score : résultat d'un modèle visant à prévoir, estimer, une caractéristique d'une instance (par exemple l'appétence).

### 1.2 La problématique de l'analyse de données

Les statistiques, qu'elles soient descriptives ou prédictives, sont utilisées pour analyser les données, afin d'en extraire de la connaissance, par exemple :
- sur quels gènes est codée telle maladie génétique ?
- quelles sont les sessions IP correspondant à une intrusion sur un réseau local ?
- quelles images contiennent un coucher de soleil ?
- quels sont les clients qui ont une forte appétence pour tel produit ?

L'utilisation des méthodes statistiques nécessite de représenter les données sous forme d'un tableau croisé : en ligne les instances et en colonnes les indicateurs caractérisant ces instances. Ce mode de stockage est inefficace. C'est pourquoi lorsque la volumétrie est importante, afin d'optimiser le stockage, les données sont stockées dans des bases de données relationnelles, et ce quel que soit le phénomène étudié : les gènes, les transactions de cartes bancaires, les sessions IP, les informations sur les clients, etc.

La première tâche de l'analyste est d'extraire le tableau croisé correspondant au problème traité. Dans la partie suivante, nous allons détailler les outils dont dispose l'analyste pour extraire un tableau croisé.

### 2. ART ANTÉRIEUR

### 2.1 L'état de l'art

### 2.1.1 Le stockage des données

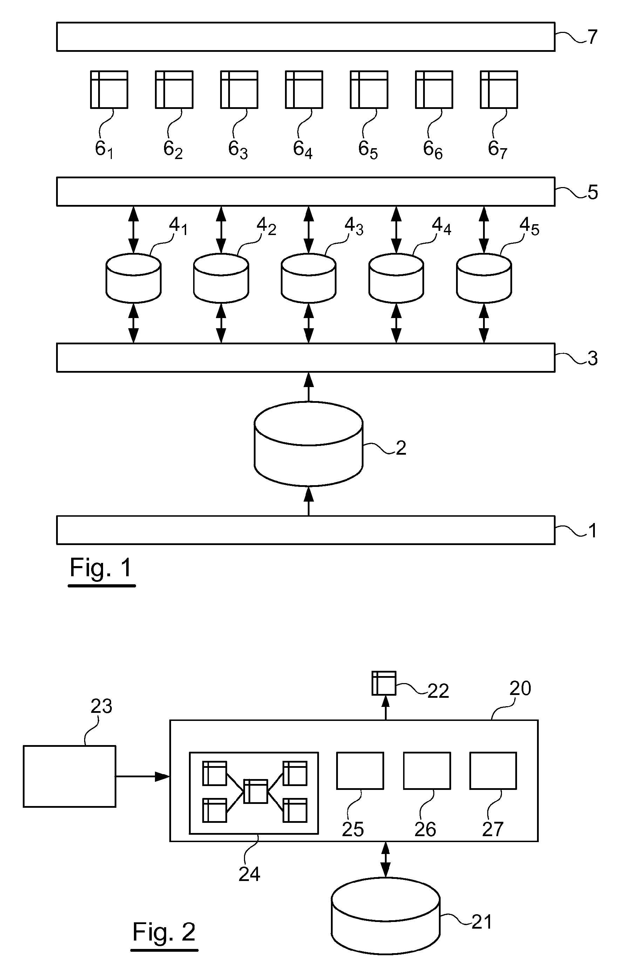

On présente maintenant, en relation avec la **figure 1**, un système d'information décisionnel classique.

Dans le système d'information décisionnel d'une grande entreprise, les données sont stockées dans un entrepôt de données (« Datawarehouse ») 2. Cette base de données relationnelle modélise toutes les interactions de l'entreprise avec son environnement: clients, fournisseurs, organisation interne...

Les modèles de données associés aux entrepôts de données sont très complexes. Il est courant qu'ils contiennent plusieurs centaines de tables. A cause du nombre de tables, l'exécution d'une requête permettant d'extraire un tableau croisé sur une telle base de données peut être très coûteuse en temps et en ressources informatiques.

C'est pourquoi dans le système d'information décisionnel, il est courant de rajouter un étage de stockage : les mini-entrepôts (« datamarts ») 4₁ à 4₅. Ce sont des bases de données relationnelles où les données sont préparées en vue d'une utilisation particulière. Grâce à l'utilisation de modèle de données en étoile, le calcul d'indicateurs est optimisé pour chaque métier de l'entreprise. Par exemple : l'analyse des produits, la gestion, l'analyse des clients, l'optimisation du réseau de télécommunications...

Pour analyser les données, un dernier niveau de stockage est nécessaire : les tableaux croisés 6₁ à 6₇. Les bases d'études sont ces tableaux croisés qui sont dédiés à la réalisation d'une étude. Par exemple : la fidélisation, l'appétence à un produit, la détection de fraude, la détection de panne dans un réseau... Les instances et les indicateurs du tableau croisé sont différents pour chacune des études. La base d'études doit être construite par l'analyste. Cette étape n'est pas anodine car le nombre de représentations potentielles des données dans un tableau croisé est gigantesque.

Ainsi, un système d'information décisionnel classique comprend trois étages de stockage :
- l'entrepôt de données (« Datawarehouse ») 2 ;
- les mini-entrepôts (« datamarts ») 4₁ à 4₅ ; et
- les tableaux croisés 6₁ à 6₇.

Par ailleurs, et comme également présenté sur la figure 1, l'architecture d'un système d'information décisionnel classique comprend en outre :
- un étage (référencé 1) comprenant des traitements d'alimentation de l'entrepôt de données ;
- un étage (référencé 3) comprenant des traitements d'interface entrée/sortie entre l'entrepôt de données et les mini-entrepôts ;
- un étage (référencé 5) comprenant des traitements d'interface entrée/sortie entre les mini-entrepôts et les tableaux croisés ; et
- un étage (référencé 7) comprenant les outils de fouille de données (« data mining »), mettant en oeuvre des applications métiers.

### 2.1.2 L'accès aux données

Pour extraire un tableau croisé, l'analyste dispose d'un langage de requête, le langage SQL (pour « Structured query language » en anglais, ou « langage structuré de requêtes »). Ce langage permet notamment de calculer des indicateurs, et d'extraire des tableaux croisés. De plus, certains logiciels d'analyses de données, comme SAS (marque déposée) ou SPSS (marque déposée), disposent d'outils graphiques permettant de faciliter la programmation des requêtes.

### 2.1.3 La sélection de données

La plupart des logiciels d'analyses de données (Kxen (marque déposée), SAS (marque déposée)...) disposent de fonctionnalités permettant de sélectionner à partir d'un tableau croisé un sous-ensemble d'indicateurs pertinents pour un problème donné.

De la même manière, ces logiciels permettent de sélectionner des instances par échantillonnage ou par filtrage.

### 2.2 Les limitations

Pour extraire un tableau croisé, l'analyste dispose d'un mode de stockage optimisé, le mini-entrepôt (« datamart »), d'un langage de requêtes, le SQL, et d'outils de sélection d'indicateurs.

La principale limitation est due au fait que le processus d'extraction et de sélection des tableaux croisés est un processus manuel. L'analyste doit produire un programme permettant d'extraire d'un ou plusieurs mini-entrepôts un tableau croisé, puis analyser ce tableau croisé. Cette opération est répétée autant de fois que nécessaire à la sélection d'un ensemble d'indicateurs pertinents pour l'étude considérée. Or le nombre d'indicateurs potentiels est tellement important, qu'il est impossible pour l'analyste de les tester tous par un tel processus.

### 3. EXPOSÉ DE L'INVENTION

Dans un mode de réalisation particulier de l'invention, il est proposé un procédé d'extraction d'un tableau croisé d'une base de données, ledit tableau croisé comprenant en ligne, respectivement colonne, des instances et en colonne, respectivement ligne, des indicateurs caractérisant lesdites instances, ledit procédé comprenant les étapes suivantes :
a) obtention d'une spécification initiale d'une étude ;
b) à partir de ladite spécification initiale, construction d'un dictionnaire d'extraction d'un tableau croisé, permettant de :
   * spécifier des instances concernées par l'étude dans la base de données ;
   * spécifier une formule d'extraction, un recodage et un rôle pour chacun des indicateurs concernés par l'étude ; et
c) extraction initiale d'un tableau croisé, en appliquant ledit dictionnaire d'extraction à ladite base de données.

Le principe général de ce mode de réalisation particulier de l'invention consiste donc en une solution technique d'automatisation du processus d'extraction d'un tableau croisé, basée sur la construction et l'utilisation d'un dictionnaire d'extraction lié de manière générique à la base de données source. Cette automatisation du processus d'extraction consiste à piloter les échanges d'informations entre la base de données source, le langage de requête et les modules de sélection de données.

Ceci permet de résoudre un problème technique, à savoir simplifier et réduire le coût des opérations d'extraction d'un tableau croisé, tout en permettant d'augmenter le nombre d'indicateurs évalués à un coût de traitement raisonnable.

Il est important de noter que ce mode de réalisation particulier de l'invention vise à modifier non pas les applications métiers mises en oeuvres avec des outils de fouille de données (« data mining ») (étage référencé 7 sur la figure 1), mais les traitements d'interface entrée/sortie entre un entrepôt de données et un tableau croisé (étages référencés 3 et 5 sur la figure 1). En d'autres termes, la solution proposée pour effectuer l'extraction du tableau croisé est une solution technique (construction d'un dictionnaire d'extraction et application de celui-ci à une base de données source) à un problème technique (voir ci-dessus), cette solution pouvant être mise en oeuvre quelle que soit la nature, technique ou non technique, de l'application métier pour laquelle ce tableau croisé est construit.

De façon avantageuse, ledit dictionnaire d'extraction d'un tableau croisé comprend :
- un dictionnaire de sélection d'instances, permettant de spécifier les instances concernées par l'étude dans la base de données ; et
- un dictionnaire de calcul d'indicateurs, permettant de spécifier la formule d'extraction, le recodage et le rôle de chacun des indicateurs.

Avantageusement, ladite étape d'extraction du tableau croisé comprend les étapes suivantes :
- application dudit dictionnaire de sélection d'instance à ladite base de données, afin d'obtenir une base de données filtrée ; et
- application dudit dictionnaire de calcul d'indicateurs à ladite base de données filtrée, afin d'obtenir ledit tableau croisé.

De façon avantageuse, ledit dictionnaire de sélection d'instances se présente sous la forme d'un tableau croisé comprenant en ligne, respectivement colonne, des conditions et en colonne, respectivement ligne, des caractéristiques caractérisant lesdites conditions. Chaque condition peut correspondre à une inclusion ou à une exclusion. Chaque ligne du dictionnaire de sélection d'instances est reliée avec la précédente par un ET logique.

De façon avantageuse, ledit dictionnaire de calcul d'indicateurs comprend :
- un dictionnaire de requêtes, permettant de spécifier la formule d'extraction de chacun des indicateurs ; et
- un dictionnaire de préparation, permettant de spécifier le recodage et le rôle de chacun des indicateurs.

De façon avantageuse, ledit dictionnaire de requêtes se présente sous la forme d'un tableau croisé comprenant en ligne, respectivement colonne, des requêtes élémentaires et en colonne, respectivement ligne, des caractéristiques caractérisant lesdites requêtes élémentaires. En outre, à chaque étape d'extraction, initiale ou supplémentaire, d'un tableau croisé :
- chaque requête élémentaire permet d'extraire de ladite base de données un tableau croisé élémentaire ; et
- les tableaux croisés élémentaires sont concaténés par colonne, respectivement ligne, afin d'obtenir ledit tableau croisé.

De façon avantageuse, ledit dictionnaire de préparation se présente sous la forme d'un tableau croisé comprenant en ligne, respectivement colonne, lesdits indicateurs et en colonne, respectivement ligne, des caractéristiques caractérisant lesdits indicateurs.

De façon avantageuse, la spécification initiale de l'étude spécifie :
- aucun ou un indicateur cible ;
- une population concernée ; et
- un espace de recherche des indicateurs.

Avantageusement, le procédé comprend en outre les étapes suivantes :
d) analyse du tableau croisé obtenu à une étape d'extraction précédente, initiale ou supplémentaire, afin de déterminer des indicateurs pertinents et/ou des instances pertinentes au regard de la spécification initiale de l'étude ;
e) modification dudit dictionnaire d'extraction, en fonction des indicateurs pertinents et/ou des instances pertinentes ; et
f) extraction supplémentaire d'un nouveau tableau croisé, en appliquant le dictionnaire d'extraction modifié à ladite base de données.

De façon avantageuse, un cycle comprenant les étapes d), e) et f) est effectué au moins deux fois.

Selon une caractéristique avantageuse, ladite base de données est un mini-entrepôt, et ledit procédé comprend en outre une étape préalable d'alimentation de ladite base de données à partir d'un entrepôt de données, ladite étape d'alimentation permettant d'extraire et transformer des données de l'entrepôt de données pour les faire correspondre à un modèle de données dudit mini-entrepôt.

De façon avantageuse, ledit modèle de données du mini-entrepôt est un modèle de données muni d'une table principale reliée en lien multiple avec des tables de faits.

D'autres modèles de données peuvent également être envisagés. La structure des dictionnaires sera adaptée au type de modèle de données.

Dans un autre mode de réalisation, l'invention concerne un produit programme d'ordinateur téléchargeable depuis un réseau de communication et/ou enregistré sur un support lisible par ordinateur et/ou exécutable par un processeur, ce produit programme d'ordinateur comprenant des instructions de code de programme pour l'exécution des étapes du procédé d'extraction précité, lorsque ledit programme est exécuté sur un ordinateur.

Dans un autre mode de réalisation, l'invention concerne un système d'extraction d'un tableau croisé d'une base de données, ledit tableau croisé comprenant en ligne, respectivement colonne, des instances et en colonne, respectivement ligne, des indicateurs caractérisant lesdites instances, ledit système comprenant :
- des moyens d'obtention d'une spécification initiale d'une étude ;
- des moyens de construction, à partir de ladite spécification initiale, d'un dictionnaire d'extraction d'un tableau croisé, permettant de :
   * spécifier des instances concernées par l'étude dans la base de données;
   * spécifier une formule d'extraction, un recodage et un rôle pour chacun des indicateurs concernés par l'étude ; et
- des moyens d'extraction d'un tableau croisé, en appliquant ledit dictionnaire d'extraction à ladite base de données.Plus généralement, le système d'extraction de tableau croisé selon l'invention comprend des moyens de mise en oeuvre du procédé d'extraction tel que décrit précédemment, dans l'un quelconque de ses différents modes de réalisation.

De façon avantageuse, le système comprend en outre : des moyens d'analyse d'un tableau croisé préalablement obtenu par les moyens d'extraction, afin de déterminer des indicateurs pertinents et/ou des instances pertinentes au regard de la spécification initiale de l'étude ; et des moyens de modification dudit dictionnaire d'extraction, en fonction des indicateurs pertinents et/ou des instances pertinentes. Lesdits moyens d'extraction sont à nouveau activés après que ledit dictionnaire d'extraction a été modifié, afin que lesdits moyens d'extraction extraient un nouveau tableau croisé, en appliquant le dictionnaire d'extraction modifié à ladite base de données.

Avantageusement, ladite base de données est un mini-entrepôt, et ledit système comprend en outre des moyens d'alimentation de ladite base de données à partir d'un entrepôt de données, lesdits moyens d'alimentation permettant d'extraire et transformer des données de l'entrepôt de données pour les faire correspondre à un modèle de données dudit mini-entrepôt.

### 4. LISTE DES FIGURES

D'autres caractéristiques et avantages de modes de réalisation de l'invention apparaîtront à la lecture de la description suivante d'un mode de réalisation préférentiel de l'invention, donné à titre d'exemple indicatif et non limitatif (tous les modes de réalisation de l'invention ne sont pas limités aux caractéristiques et avantages de ce mode de réalisation préférentiel), et des dessins annexés, dans lesquels :.
- la figure 1 présente l'architecture d'un système d'information décisionnel classique ;
- la figure 2 présente un schéma illustrant le principe général de la technique d'extraction selon un mode de réalisation particulier de la présente invention ;
- la figure 3 présente un synoptique d'un mode de réalisation particulier du système d'extraction selon l'invention ;
- la figure 4 présente un exemple de modèle de données pour le mini-entrepôt apparaissant sur la figure 3 ;
- la figure 5 présente un organigramme d'un mode de réalisation particulier du procédé d'extraction selon l'invention ; et
- la figure 6 présente la structure d'un système d'extraction selon un mode de réalisation particulier de l'invention.

### 5. DESCRIPTION DÉTAILLÉE

Sur toutes les figures du présent document, les éléments ou étapes identiques sont désignés par une même référence numérique.

### 5.1 Introduction

Comme illustré sur la **figure 2,** un mode de réalisation particulier de l'invention concerne un système d'extraction 20, permettrant d'extraire un tableau croisé 22 d'un entrepôt de données 21, pour une étude donnée. Ce système 20 met en oeuvre un procédé de pilotage permettant d'automatiser le processus d'extraction.

En entrée du système 20, l'utilisateur fournit une spécification initiale de l'étude 23, comprenant :
- une variable cible de l'étude, par exemple l'appétence à un produit, ou bien aucune variable cible ;
- la population concernée par l'étude, par exemple les clients d'ancienneté inférieure à 5 ans ; et
- une requête initiale correspondant à l'espace de recherche des indicateurs.

En sortie, le système 20 produit automatiquement le tableau croisé 22 ne contenant que les indicateurs et les instances pertinentes pour l'étude. Si aucune variable cible n'est spécifiée, le système produit automatiquement le tableau croisé contenant les indicateurs de l'espace de recherche et la population concernée par l'étude.

L'automatisation du système repose sur le pilotage des échanges d'informations entre les données sources et le processus de sélection de données.

Dans le mode de réalisation particulier détaillé ci-après, le pilotage de l'extraction de données par un programme est rendu possible par le couplage entre un mini-entrepôt (« datamart ») 24 muni d'un modèle de données normalisé et trois dictionnaires 25 à 27 au format fixé.

Ce mini-entrepôt 24 peut être qualifié de « dossier de données » (ou « data folder » en anglais). Il sert d'interface entre la source de données 21 et le système 20. La source de données 21 possède un format ou un modèle de données quelconque. Le mini-entrepôt 24 permet de normaliser cette source de données.

Les dictionnaires 25 à 27 possèdent un format fixé correspondant au modèle de données du mini-entrepôt 24. Ce format fixé a pour but de normaliser la spécification d'une extraction d'un tableau croisé. Cette spécification est décomposée sur les trois dictionnaires suivants :
- un dictionnaire de sélection d'instances 25, permettant de choisir une population d'étude ;
- un dictionnaire de requêtes 26, permettant de spécifier les requêtes produites sur le mini-entrepôt ; et
- un dictionnaire de préparation 27, permettant de spécifier le recodage et le rôle des indicateurs.

Cette décomposition d'une requête en trois dictionnaires permet d'extraire tous les indicateurs nécessaires aux études. La seule limitation est que ce système ne permet pas de prendre en compte les combinaisons d'indicateurs pour faire par exemple un ratio. Cependant, cette combinaison peut être effectuée sur le tableau croisé, après le processus d'extraction automatique.

Les trois dictionnaires précités 25 à 27 forment ensemble un dictionnaire d'extraction d'un tableau croisé (ou DTE pour « Data Table Extraction »). Dans une variante de l'invention, ces trois dictionnaires 25 à 27 pourraient être remplacés par un unique dictionnaire assurant toutes les fonctions nécessaires.

De même, le dictionnaire de requêtes 26 et le dictionnaire de préparation 27 forment ensemble un dictionnaire de calcul d'indicateurs (ou DFIC pour « Data Folder Indicators Calculation »). Dans une variante de l'invention, ces deux dictionnaires 26 et 27 pourraient être remplacés par un unique dictionnaire assurant toutes les fonctions nécessaires.

### 5.2 Le système et le procédé d'extraction automatique

### 5.2.1 Description générale

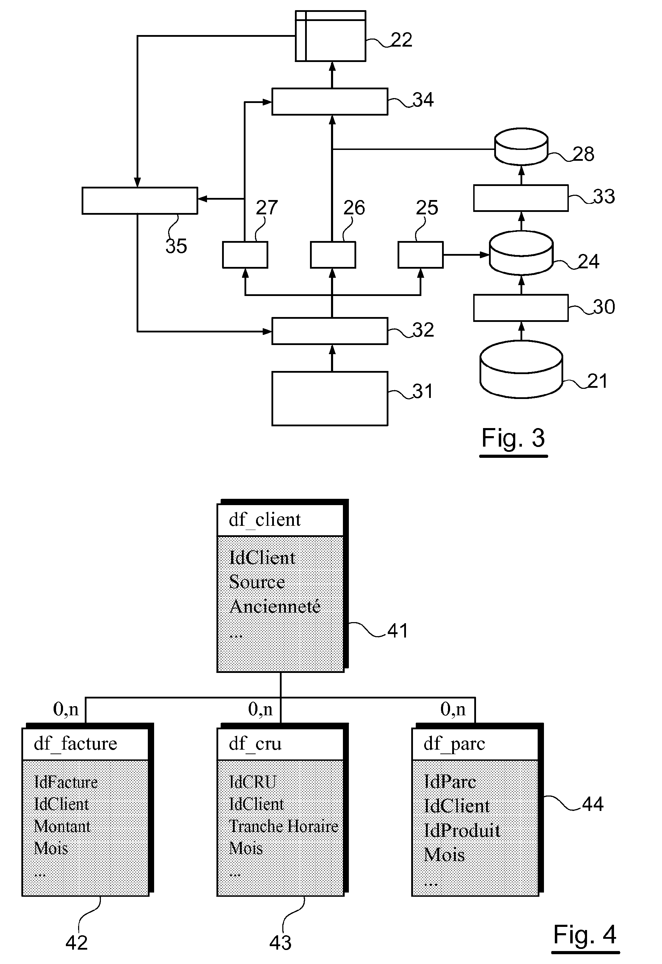

Comme illustré sur le synoptique de la **figure 3,** dans un mode de réalisation particulier, le système d'extraction selon l'invention comprend :
- un module 30 d'alimentation, permettant d'alimenter le mini-entrepôt 24 à partir de l'entrepôt de données 21 ;
- un module 31 de spécification, permettant au système d'obtenir une spécification initiale d'une étude. Par exemple, l'utilisateur (analyste ou autre) fournit cette spécification initiale via une interface graphique ;
- un module 32 de pilotage, permettant de construire ou modifier les trois dictionnaires. Au départ, il y a construction des trois dictionnaires à partir de la spécification initiale obtenue par le module 31 de spécification. Puis, il y a modification des trois dictionnaires à partir d'indicateurs pertinents et/ou d'instances pertinentes fourni(e)s par le module 35 de sélection de données (voir ci-après) ;
- un module 33 de filtrage, permettant de filtrer le mini-entrepôt 24 en appliquant le dictionnaire de sélection d'instances 25, et ainsi obtenir un mini-entrepôt filtré 28 ;
- un module 34 de mise à plat, permettant d'extraire le tableau croisé 22 du mini-entrepôt filtré 28, en appliquant le dictionnaire de requêtes 26 et le dictionnaire de préparation 27 ; et
- un module 35 de sélection de données, permettant d'analyser un tableau croisé préalablement extrait par le module 34 de mise à plat, et fournir au module 32 de pilotage des indicateurs pertinents et/ou des instances pertinentes.

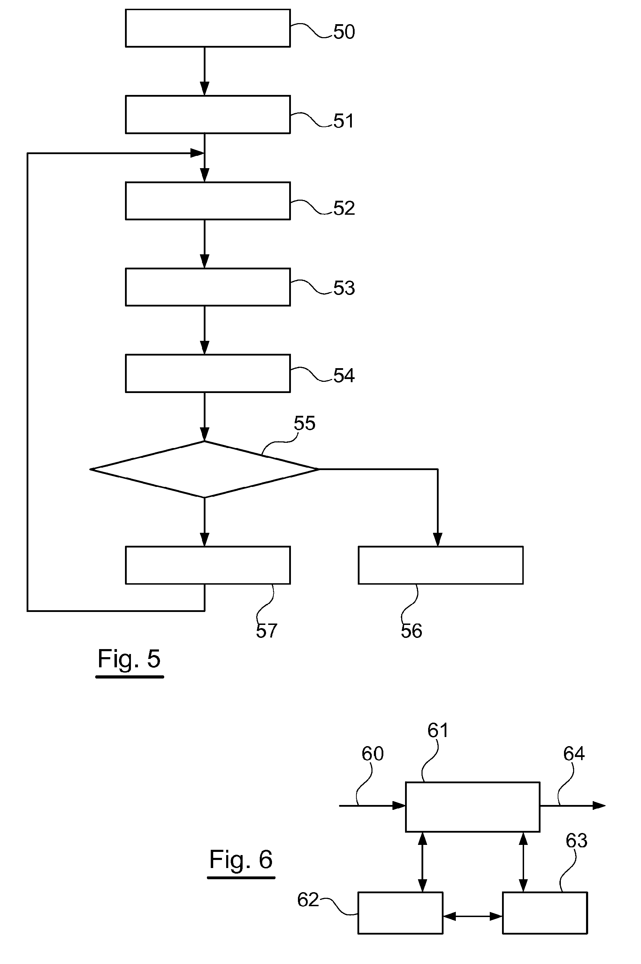

La **figure 6** présente la structure du système d'extraction selon un mode de réalisation particulier de l'invention. Il comprend une mémoire 63, une unité de traitement 61, équipée par exemple d'un microprocesseur, et pilotée par un programme d'ordinateur 62 mettant en oeuvre :
- les modules précités (module 30 d'alimentation, module 31 de spécification, module 32 de pilotage, module 33 de filtrage, module 34 de mise à plat et module 35 de sélection de données) et
- le procédé d'extraction d'un tableau croisé selon l'invention (par exemple le mode de réalisation particulier décrit ci-après en relation avec la figure 5).

A l'initialisation, les instructions de code du programme d'ordinateur 62 sont par exemple chargées dans une mémoire RAM avant d'être exécutées par le processeur de l'unité de traitement 61.

On présente maintenant, en relation avec l'organigramme de la **figure 5**, un mode de réalisation particulier du procédé d'extraction selon l'invention.

Dans une étape référencée 50, le module 30 d'alimentation alimente le mini-entrepôt 24 à partir de l'entrepôt de données 21. Dans une étape référencée 51, le module 31 de spécification obtient une spécification initiale d'une étude. Dans une étape référencée 52, le module 32 de pilotage construit les trois dictionnaires 25 à 27 à partir de la spécification initiale précitée. Dans une étape référencée 53, le module 33 de filtrage obtient le mini-entrepôt filtré 28 en filtrant le mini-entrepôt 24 par application du dictionnaire de sélection d'instances 25. Dans une étape référencée 54, le module 34 de mise à plat extrait le tableau croisé 22 du mini-entrepôt filtré 28, en appliquant le dictionnaire de requêtes 26 et le dictionnaire de préparation 27. Dans une étape référencée 55, le système détecte si un critère d'arrêt est vérifié. En cas de détection positive, on passe à l'étape de fin référencée 56.

Sinon, un cycle comprenant les étapes successives référencées 57, 52, 53, 54 et 55 est effectué. Dans l'étape référencée 57, le module 35 de sélection de données analyse le tableau croisé et fournit au module 32 de pilotage des indicateurs pertinents et/ou des instances pertinentes. Dans l'étape référencée 52, le module 32 de pilotage modifie (si nécessaire) les trois dictionnaires 25 à 27 à partir des indicateurs pertinents et/ou d'instances pertinentes fourni(e)s par le module 35 de sélection de données. Dans l'étape référencée 53, le module 33 de filtrage obtient un nouveau mini-entrepôt filtré 28 en filtrant le mini-entrepôt 24 par application du dictionnaire de sélection d'instances 25 modifié. Dans l'étape référencée 54, le module 34 de mise à plat extrait un nouveau tableau croisé 22 du nouveau mini-entrepôt filtré 28, en appliquant le dictionnaire de requêtes 26 modifié et le dictionnaire de préparation 27 modifié. Dans l'étape référencée 55, le système détecte à nouveau si le critère d'arrêt est vérifié.

Ainsi, le processus d'extraction automatique se décompose en au moins deux cycles :
- un premier cycle, comprenant les étapes référencées 50, 51, 52, 53, 54 et 55, ayant pour objectif de produire un premier tableau croisé contenant tous les indicateurs à tester ;
- un second cycle, itéré au moins une fois et comprenant les étapes référencées 57, 52, 53, 54 et 55, permettant de prendre en compte la spécification d'extraction provenant du module de sélection de données.

Il peut être pertinent de réitérer plusieurs fois le second cycle, afin par exemple que le module 35 de sélection de données détermine d'abord les indicateurs pertinents puis ensuite les instances pertinentes représentatives au sens des indicateurs. Dans ce cas, le critère d'arrêt est modifié de manière à exécuter le nombre de cycles voulu.

### 5.2.2 L'alimentation

Le système d'extraction de l'invention est connecté avec la source de données (entrepôt de données) 21 via une base de données, le mini-entrepôt 24. Le mini-entrepôt est alimenté à partir de la base de données sources. Le processus d'alimentation a pour objet d'extraire et de transformer les données de la source de données pour les faire correspondre au modèle de données du mini-entrepôt. Cette étape 50 correspond au paramétrage du système. Elle est réalisée une fois pour toute lors de l'installation du système d'extraction automatique au-dessus de la source de données.

Le module 30 d'alimentation est réalisé par un logiciel de type ETL (Extraction Transformation and Loading). Le logiciel Amadea (marque déposée) de la société ISOFT est par exemple choisi pour réaliser ce module, pour ses performances en volumétrie et sa simplicité d'usage.

### 5.2.3 Le pilotage

Le pilotage 52 consiste à écrire puis modifier le dictionnaire contenant les requêtes 26, le dictionnaire précisant le recodage et le rôle de chaque indicateur 27, et le dictionnaire sélectionnant la population 25.

Ces dictionnaires peuvent être modifiés, dans le module 32 de pilotage, à travers une interface graphique lorsque c'est l'analyste qui pilote l'extraction ou pour la phase de spécification initiale. Lorsque le module 35 de sélection d'indicateurs et/ou d'instances pilote les extractions, les dictionnaires sont modifiés automatiquement pour prendre en compte les sélections de données.

Les dictionnaires sont stockés sous la forme de tableaux Excel. Un programme en C++ est utilisé pour interfacer les dictionnaires avec la sortie du module de sélection de données.

### 5.2.4 Le filtrage

Le filtrage 53 du mini-entrepôt permet de ne focaliser que sur la population concernée par l'étude. Ce filtre est spécifié dans le dictionnaire de sélection d'instances (ou DFS pour « Data Folder Selection »). Le résultat de cette opération est un mini-entrepôt filtré.

Le module 33 de filtrage est réalisé par un logiciel de type ETL (« Extraction Transformation and Loading »). Le logiciel Amadea (marque déposée) de la société ISOFT est par exemple choisi pour réaliser ce module, pour ses performances en volumétrie et sa simplicité d'usage.

### 5.2.5 La mise à plat

L'étape de mise à plat 54 consiste à appliquer le dictionnaire de requêtes 26 (ou DFQ pour « Data Folder Queries ») et le dictionnaire de préparation 27 (ou DTP pour « Data Table Preparation ») pour produire un tableau croisé 22 à partir du mini-entrepôt filtré 28.

Le module de mise à plat 34 est réalisé par un logiciel de type ETL. Le logiciel Amadea (marque déposée) de la société ISOFT est par exemple choisi pour réaliser ce module, pour ses performances en volumétrie et sa simplicité d'usage.

### 5.2.6 La sélection de données

Le module 35 de sélection de données analyse le tableau croisé 22 pour déterminer les indicateurs pertinents et les instances pertinentes (étape 54). La pertinence peut être définie en fonction d'une variable cible (c'est-à-dire un indicateur cible). La variable cible est spécifiée dans le dictionnaire de recodage 27. La liste des indicateurs et des instances retenus est fournie au module 32 de pilotage.

Le module de sélection de données est réalisé par le logiciel Khiops de la société France Télécom décrit notamment dans le document FR2865056.

### 5.3 Les interfaces

### 5.3.1 Le mini-entrepôt

L'objectif du mini-entrepôt 24 est d'assurer une interface entre les données sources 21 et le système 20. Le mini-entrepôt est une base de données avec un modèle de données normalisé. L'utilisation de ce type de modèle de données, illustré sur la **figure 4,** permet de normaliser la source de données :
- la table principale 41 correspond au domaine étudié. Pour l'analyse de données clients, cette table comprendra les informations directement liées au client comme son nom, son adresse...
- les tables de faits 42 à 44 sont en liens multiples avec la table principale 41. A chaque instance de la table principale correspond un nombre variable de faits. Pour des données de télécommunications, on retrouvera par exemple une table décrivant les services détenus, une table traçant les usages de ces services, une table récapitulant les factures...

Ce type de modélisation est suffisamment expressif pour s'adapter à tous les types de données. La structure en étoile permet d'optimiser le calcul des indicateurs lorsque la ou les clé(s) d'agrégation est (sont) sur la table principale. Dans ce cas, le calcul d'un indicateur nécessite au plus une seule jointure entre la table principale et la table de faits. Dans un entrepôt de données, le calcul d'un indicateur peut impliquer un très grand nombre de jointures.

Enfin ce type de modèle de données, où le rôle de chaque table est bien défini, permet de construire des langages d'interrogation formatés et donc automatisables. En effet, une requête portera toujours sur deux tables au plus : la table principale et une des tables de faits. La ou les clé(s) d'agrégation se trouvera(ont) toujours sur la table principale. La formule d'agrégation portera toujours sur les données de la table de faits.

### 5.3.2 Le dictionnaire de sélection d'instances (DFS)

Le dictionnaire de sélection d'instances (DFS) 25 permet de spécifier les instances concernées par l'étude dans le mini-entrepôt 24. La sélection porte sur une clé d'agrégation de la table principale. Cette clé est spécifiée dans le dictionnaire de préparation (DTP) 27.

Le dictionnaire de sélection d'instances (DFS) 25 se présente sous la forme d'un tableau croisé (voir l'exemple du tableau 2 ci-dessous). Chaque ligne est une condition possédant par exemple quatre colonnes permettant de la définir. Le tableau 1 ci-dessous présente un exemple de langage du dictionnaire de sélection d'instances. L'utilisation de ce type de dictionnaire formaté permet à un programme de modifier la sélection. Il suffit de modifier le contenu d'une case du tableau pour modifier la sélection.

**Tableau 1**

| **Mot clé** | **Description** |
|---|---|
| Table | Table sur laquelle porte la requête |
| ID | Identifiant du champ de sélection |
| Val_Sel | Valeurs sélectionnées: |
| | * : toutes les valeurs |
| | {val1,...,valn} : liste de valeurs |
| | [val1,valn] : intervalle de valeurs |
| | [val1,vali];[valj,valn] : liste d'intervalles de valeurs |
| Action | Inclure ou Exclure |

Chaque ligne du dictionnaire de sélection d'instances (DFS) 25 est reliée avec la précédente par un ET logique. Comme chaque condition peut correspondre à une inclusion ou à une exclusion, ce langage permet deux types de combinaisons entre les conditions : le ET et le NON ET. Il est possible de démontrer qu'avec ces deux opérateurs logiques élémentaires, on peut construire n'importe quel autre opérateur logique. Le pouvoir d'expression de ce langage est donc suffisant pour produire n'importe quelle sélection de population sur le mini-entrepôt.

L'exemple du tableau 2 ci-dessous permet de sélectionner les clients qui ont une ancienneté de 1 à 5 ans, et qui possèdent l'offre ADSL.

**Tableau 2**

| **Table** | **ID** | **Val_Sel** | **Action** |
|---|---|---|---|
| df_tiers | ancienneté | [1;5] | Inclure |
| df_edp | offre | ADSL | Inclure |

### 5.3.3 Le dictionnaire de requêtes (DFQ)

Le dictionnaire de requêtes (DFQ) 26 permet de spécifier la mise à plat des données du mini-entrepôt à partir d'un ensemble de requêtes. Chaque requête porte sur une clé d'agrégation de la table principale. Cette clé est spécifiée dans le dictionnaire de préparation (DTP) 27.

Le dictionnaire de requêtes (DFQ) 26 se présente sous la forme d'un tableau croisé. Chaque ligne est une requête possédant m colonnes. Le tableau 3 ci-dessous présente un exemple de langage du dictionnaire de requêtes. L'utilisation de ce type de dictionnaire formaté permet à un programme de modifier une requête. Il suffit de modifier le contenu d'une case du tableau pour modifier la requête.

**Tableau 3**

| **Mot clé** | **Description** |
|---|---|
| ID | Identifiant de la famille d'indicateurs |
| Type | Type de la famille d'indicateurs (Symbol, Continuous) |
| Table | Table sur laquelle porte la requête |
| Opérateur | Get : Récupère les données |
| | InstanceNumber : Nombre d'instances du champ opérande |
| | ValueNumber : Nombre de valeurs différentes du champ opérande |
| | Total : Somme des valeurs du champ opérande |
| | MeanValue : Valeur moyenne du champ opérande |
| | ... |
| Opérande | Champ principal sur lequel porte l'opérateur |
| ID Sel_1 à m | Identifiant du champ de croisement avec lequel sera croisé l'opérande |
| OP_Sel_1 à m | Champ de croisement, c'est-à-dire champ de la table source sur lequel porte le croisement |
| Val_Sel_1 à m | Valeurs sélectionnées : |
| | * : toutes les valeurs |
| | {val1,...,valn} : liste de valeurs |
| | [val1,valn] : intervalle de valeurs |
| | [vall,vali];[valj,valn] : liste d'intervalle de valeurs |

Chacune des lignes du dictionnaire de requêtes (DFQ) 26 correspond à une requête élémentaire qui génère un tableau croisé élémentaire contenant un nombre d'instances (fixe quel que soit la requête élémentaire : c'est le nombre d'instances du mini-entrepôt filtré 28) et un nombre d'indicateurs (variable en fonction de la requête élémentaire). Chaque ligne est indépendante des autres. Le tableau croisé résultant est la concaténation par colonne des différents tableaux croisés élémentaires.

Ce langage est suffisamment puissant pour permettre de spécifier un grand nombre d'indicateurs en quelques lignes. Le tableau 4 ci-dessous est un exemple de spécifications de cinq familles d'indicateurs :
- la civilité : 1 indicateur ;
- l'identifiant des clients : 1 indicateur ;
- le nombre de numéros différents appelés par tranche horaire et par mois : 288 indicateurs (24 heures * 12 mois) ;
- le nombre d'appels total par mois : 12 indicateurs (12 mois) ; et
- la durée d'appels par jour nommé et mois : 84 indicateurs (7 jours * 12 mois).

**Tableau 4**

| **ID** | **Type** | **table** | **operator** | **operand** | **ID_Sel_1** | **OP_Sel_1** | **Val_Sel _1** | **ID_Sel_2** | **OP _Sel_2** | **Val_ Sel_2** | **Nom indicateur généré** |
|---|---|---|---|---|---|---|---|---|---|---|---|
| civilite | Symbol | df_tiers | Get | civilite | | | | | | | civilite |
| Idclient | Continuous | df_tiers | Get | age | | | | | | | age |
| nb_num_diff_appele | Continuous | df_cru | ValueNumber | ND_appele_crypte | _TH | tranche_horaire | * | _M | mois | * | nb_num_diff_appele_TH1_M1;... nb_num_diff_appele_TH24_M1;... nb_num_diff_appele_TH24_M6 |
| nb_appels_total | Continuous | df_cru | InstanceNumber | ND_appele_crypte | _M | _mois | * | | | | nb_appels_total_M1;... nb_appels_total_M6 |
| du_appels | Continuous | df_cru | Total | durée | _J | jour_nomme | * | _M | mois | * | du_appels_Jlundi_M1;... du_appels_Jdimanche_M1;... du_appels_Jdimanche_M6 |

### 5.3.4 Le dictionnaire de préparation (DTP)

Le dictionnaire de préparation (DTP) 27 est cohérent avec le dictionnaire de requêtes (DFQ) 26. Il est par exemple généré à partir ce celui-ci, afin de spécifier le recodage et le rôle de chacun des indicateurs produits par les requêtes du dictionnaire de requêtes. Le dictionnaire de préparation (DTP) 27 se présente sous la forme d'un tableau croisé. Chaque ligne correspond à un indicateur et chacune des six colonnes à une caractéristique de l'indicateur. Le tableau 5 ci-dessous présente un exemple de langage du dictionnaire de préparation. L'utilisation de ce type de dictionnaire formaté permet à un programme de modifier le recodage. Il suffit de modifier le contenu d'une case du tableau pour modifier le recodage.

**Tableau 5**

| **Mot clé** | **Description** |
|---|---|
| Name | Nom de l'indicateur |
| Label | Libellé long de l'indicateur. Ce libellé est généré par l'interprétation de la requête DFQ |
| Type | Type de la famille d'indicateurs (Symbol, Continuous) |
| Status | "T" pour l'indicateur cible (target) |
| | "I" pour l'indicateur identifiant d'agrégation |
| | "V" pour les indicateurs explicatifs |
| | "U" pour les indicateurs non utilisés |
| F_extract | Formule de calcul à partir du mini-entrepôt. Cette formule d'extraction est reprise à partir du dictionnaire de requêtes (DFQ) en séparant les champs par "/" |
| F_discret | Formule de discrétisation (ou groupage si indicateur symbolique). Pour les indicateurs continus, on utilisera des listes d'intervalles [a,b] ou des listes valeurs séparées par des ";" pour spécifier les coupures. Pour les indicateurs modaux, on utilisera des listes de groupes de valeurs {a,b} ou des listes de valeurs séparées par des ";" pour spécifier les coupures. |
| Level | Evaluation de la valeur prédictive de l'indicateur. Cette valeur prédictive peut être donnée un algorithme de sélection d'indicateurs. |

Le tableau 6 ci-dessous est un exemple de dictionnaire de préparation (DTP).

**Tableau 6**

| **Name** | **Label** | **Type** | **Status** | **F_Extract** | **F_discret** | **Level** |
|---|---|---|---|---|---|---|
| V1 | civilite | Symbol | T | df_tiers/Get/civilite | M;{ Mme, Mlle} | |
| V2 | age | Symbol | V | df_tiers/Get/age | | |
| V3 ... V146 | nb_num_diff_appele_TH1_M1 ... nb_num_diff_appele_TH 24_M6 | Continuous | V | df_cru/ValueNumber/ND_appele/_TH/tranche_horaire/1/_M/mois/1 ... df_cru/ValueNumber/ND_appele/_TH/tranche_horaire/24/_M/mois/6 | | |
| V147 V153 | nb_appels_total_M1 ... nb_appels_total_M6 | Continuous | V | df_cru/InstanceNumber/_M/mois/1 ... df_cru/InstanceNumber/_M/mois/6 | 10 ... 10 | |
| V154 V196 | du_appels_JIundi_M1 ... du_appels_Jdimanche_M6 | Continuous | V | df_cru/Total/duree_J/jour_nomme/1/_M/mois/1 ... df_cru/Total/duree_J/jour_nomme/1/_M/mois/1 | [0,10 [;[10; 20] ... [0,10 [;[10; 20] | |

## Revendications

1. Procédé d'extraction d'un tableau croisé (22) d'une base de données (24), ledit tableau croisé comprenant en ligne, respectivement colonne, des instances et en colonne, respectivement ligne, des indicateurs caractérisant lesdites instances, ledit procédé étant **caractérisé en ce qu'**il comprend les étapes suivantes :
a) obtention (51) d'une spécification initiale d'une étude ;
b) à partir de ladite spécification initiale, construction (52) d'un dictionnaire d'extraction d'un tableau croisé (25, 26, 27), permettant de :
* spécifier des instances concernées par l'étude dans la base de données ;
* spécifier une formule d'extraction, un recodage et un rôle pour chacun des indicateurs concernés par l'étude ; et
c) extraction initiale (53, 54) d'un tableau croisé, en appliquant ledit dictionnaire d'extraction à ladite base de données.

2. Procédé selon la revendication 1, **caractérisé en ce que** ledit dictionnaire d'extraction d'un tableau croisé comprend :
- un dictionnaire de sélection d'instances (25), permettant de spécifier les instances concernées par l'étude dans la base de données ; et
- un dictionnaire de calcul d'indicateurs (26, 27), permettant de spécifier la formule d'extraction, le recodage et le rôle de chacun des indicateurs.

3. Procédé selon la revendication 2, **caractérisé en ce que** ladite étape (53, 54) d'extraction du tableau croisé comprend les étapes suivantes :
- application (53) dudit dictionnaire de sélection d'instance à ladite base de données, afin d'obtenir une base de données filtrée ; et
- application (54) dudit dictionnaire de calcul d'indicateurs à ladite base de données filtrée, afin d'obtenir ledit tableau croisé.

4. Procédé selon la revendication 3, **caractérisé en ce que** ledit dictionnaire de sélection d'instances (25) se présente sous la forme d'un tableau croisé comprenant en ligne, respectivement colonne, des conditions et en colonne, respectivement ligne, des caractéristiques caractérisant lesdites conditions, **en ce que** chaque condition peut correspondre à une inclusion ou à une exclusion, et **en ce que** chaque ligne du dictionnaire de sélection d'instances (DFS) est reliée avec la précédente par un ET logique.

5. Procédé selon l'une quelconque des revendications 2 à 4, **caractérisé en ce que** ledit dictionnaire de calcul d'indicateurs (26, 27) comprend :
- un dictionnaire de requêtes (26), permettant de spécifier la formule d'extraction de chacun des indicateurs ; et
- un dictionnaire de préparation (27), permettant de spécifier le recodage et le rôle de chacun des indicateurs.

6. Procédé selon la revendication 5, **caractérisé en ce que** ledit dictionnaire de requêtes (26) se présente sous la forme d'un tableau croisé comprenant en ligne, respectivement colonne, des requêtes élémentaires et en colonne, respectivement ligne, des caractéristiques caractérisant lesdites requêtes élémentaires,
et **en ce que** à chaque étape d'extraction, initiale ou supplémentaire, d'un tableau croisé :
- chaque requête élémentaire permet d'extraire de ladite base de données un tableau croisé élémentaire ; et
- les tableaux croisés élémentaires sont concaténés par colonne, respectivement ligne, afin d'obtenir ledit tableau croisé.

7. Procédé selon l'une quelconque des revendications 5 et 6, **caractérisé en ce que** ledit dictionnaire de préparation (27) se présente sous la forme d'un tableau croisé comprenant en ligne, respectivement colonne, lesdits indicateurs et en colonne, respectivement ligne, des caractéristiques caractérisant lesdits indicateurs.

8. Procédé selon l'une quelconque des revendications 1 à 7, **caractérisé en ce que** la spécification initiale de l'étude spécifie:
- aucun ou un indicateur cible ;
- une population concernée ; et
- un espace de recherche des indicateurs.

9. Procédé selon l'une quelconque des revendications 1 à 8, **caractérisé en ce qu'**il comprend en outre les étapes suivantes :
d) analyse (57) du tableau croisé obtenu à une étape d'extraction précédente, initiale ou supplémentaire, afin de déterminer des indicateurs pertinents et/ou des instances pertinentes au regard de la spécification initiale de l'étude ;
e) modification (52) dudit dictionnaire d'extraction, en fonction des indicateurs pertinents et/ou des instances pertinentes ; et
f) extraction supplémentaire (53, 54) d'un nouveau tableau croisé, en appliquant le dictionnaire d'extraction modifié à ladite base de données.

10. Procédé selon la revendication 9, **caractérisé en ce qu'**un cycle comprenant les étapes d), e) et f) est effectué au moins deux fois.

11. Procédé selon l'une quelconque des revendications 1 à 10, **caractérisé en ce que** ladite base de données (24) est un mini-entrepôt, et **en ce que** ledit procédé comprend en outre une étape préalable d'alimentation (50) de ladite base de données (24) à partir d'un entrepôt de données (21), ladite étape d'alimentation permettant d'extraire et transformer des données de l'entrepôt de données pour les faire correspondre à un modèle de données dudit mini-entrepôt.

12. Procédé selon la revendication 11, **caractérisé en ce que** ledit modèle de données du mini-entrepôt (24) est un modèle de données muni d'une table principale reliée en lien multiple avec des tables de faits.

13. Produit programme d'ordinateur téléchargeable depuis un réseau de communication et/ou enregistré sur un support lisible par ordinateur et/ou exécutable par un processeur, **caractérisé en ce qu'**il comprend des instructions de code de programme pour l'exécution des étapes du procédé selon au moins une des revendications 1 à 12, lorsque ledit programme est exécuté sur un ordinateur.

14. Système d'extraction d'un tableau croisé d'une base de données, ledit tableau croisé comprenant en ligne, respectivement colonne, des instances et en colonne, respectivement ligne, des indicateurs caractérisant lesdites instances, ledit système étant **caractérisé en ce qu'**il comprend :
- des moyens d'obtention d'une spécification initiale d'une étude ;
- des moyens de construction, à partir de ladite spécification initiale, d'un dictionnaire d'extraction d'un tableau croisé, permettant de :
* spécifier des instances concernées par l'étude dans la base de données;
* spécifier une formule d'extraction, un recodage et un rôle pour chacun des indicateurs concernés par l'étude ; et
- des moyens d'extraction d'un tableau croisé, en appliquant ledit dictionnaire d'extraction à ladite base de données.

15. Système selon la revendication 14, **caractérisé en ce qu'**il comprend en outre :
- des moyens d'analyse d'un tableau croisé préalablement obtenu par les moyens d'extraction, afin de déterminer des indicateurs pertinents et/ou des instances pertinentes au regard de la spécification initiale de l'étude ; et
- des moyens de modification dudit dictionnaire d'extraction, en fonction des indicateurs pertinents et/ou des instances pertinentes ;
lesdits moyens d'extraction étant à nouveau activés après que ledit dictionnaire d'extraction a été modifié, afin que lesdits moyens d'extraction extraient un nouveau tableau croisé, en appliquant le dictionnaire d'extraction modifié à ladite base de données.

16. Système selon l'une quelconque des revendications 14 et 15, **caractérisé en ce que** ladite base de données est un mini-entrepôt, et **en ce que** ledit système comprend en outre des moyens d'alimentation de ladite base de données à partir d'un entrepôt de données, lesdits moyens d'alimentation permettant d'extraire et transformer des données de l'entrepôt de données pour les faire correspondre à un modèle de données dudit mini-entrepôt.
